# EUROPÄISCHE PATENTSCHRIFT

(11) **EP 3 415 890 B1**
(45) Veröffentlichungstag und Bekanntmachung des Hinweises auf die Patenterteilung: **03.06.2020**
(21) Anmeldenummer: 17175755.2
(22) Anmeldetag: 13.06.2017
(51) Int. Cl.: G01M 5/00

(54) **PRÜFSTAND FÜR EINE PITCHDREHVERBINDUNG**
TEST BENCH FOR A PITCH-PIVOT CONNECTION
BANC D'ESSAI POUR UN RACCORD D'ARTICULATION DE PAS

(43) Veröffentlichungstag der Anmeldung: 19.12.2018
(73) Patentinhaber: Nordex Energy GmbH, 22419 Hamburg (DE)
(72) Erfinder: Nitzpon, Joachim, 18209 Steffenshagen (DE); Kohlrusch, Matthias, 18258 Schwaan OT Letschow (DE)
(74) Vertreter: Hauck Patentanwaltspartnerschaft mbB

(56) Entgegenhaltungen:
- DE-U1-202010 003 033
- KR-B1- 101 482 778

## Beschreibung

Die vorliegende Erfindung betrifft einen Prüfstand, der eine in einem Rotornabenadapter gehaltene Rotornabe aufweist, an die über eine Drehverbindung ein Rotorblattelement montiert ist. Geprüft wird die Pitchdrehverbindung.

Prüfstände werden eingesetzt, um beschleunigte Lebensdauertests für eine Drehverbindung durchzuführen, Verformungsmessungen und Validierungen der Finite-Elemente-Modelle für die Drehverbindung durchzuführen. Ferner können an Prüfständen Schadensmechanismen validiert und Funktionstests für alternative Bauformen mit geringem Aufwand ausgeführt werden. Drehverbindungen zwischen Rotornabe und Rotorblatt werden auch als Pitchdrehverbindung bezeichnet.

Aus EP 2 741 068 B1 ist ein Prüfstand für ein Rotorblatt bekannt geworden, bei dem ein vollständiges Rotorblatt an einer Tragstruktur befestigt und über ein Anregungsaggregat in Schwingungen versetzt wird. Federelemente, die jeweils zwischen einer im Prüfbetrieb ortsfesten Anlenkstelle und dem Rotorblatt geschaltet und mit dem Rotorblatt derart verbunden, dass das Rotorblatt zur Beeinflussung des Schwingungsverhaltens durch die Federelemente mit Federkräften beaufschlagt wird, deren Kraftrichtung wenigstens eine Komponente aufweist, die parallel zur Hauptbelastungsrichtung des Rotorblatts verläuft. Hierdurch kann eine Reduktion der Prüfdauer erzielt werden.

Aus EP 2 650 666 A2 ist eine Vorrichtung für eine Belastungsprüfung an einer Windenergieanlage bekannt geworden. Zur Einleitung der Betriebsbelastungen werden gegenüber den Rotorblättern verkürzte Prüfhebel mit Beschwerungskörpern an ihren freien Enden eingesetzt.

Aus KR 101482778 ist eine Testeinrichtung für ein Rotorblatt bekannt, bei der eine Ermüdung des Rotorblatts akustisch gemessen wird. Das Rotorblatt ist an seiner Blattwurzel eingespannt und zudem ist ein das Rotorblatt umschließender Rahmen vorgesehen. Auf dem Rotorblatt sind akustische Sensoren angebracht.

Aus EP 2 315 940 ist ein weiterer Prüfstand zum Testen von Rotorblättern bekannt geworden. Bei dem Prüfstand wird das fixierte Rotorblatt mit Gewichten verbunden, die über Betätigungseinrichtungen in Schwingungen versetzt werden können.

Der Erfindung liegt die Aufgabe zugrunde, einen Prüfstand bereitzustellen, der mit möglichst einfachen Mitteln es gestattet, eine Pitchdrehverbindung zu prüfen.

Erfindungsgemäß wird die Aufgabe durch eine Vorrichtung mit den Merkmalen aus Anspruch 1 gelöst. Vorteilhafte Ausgestaltungen bilden den Gegenstand der Unteransprüche.

Die erfindungsgemäße Vorrichtung dient als ein Prüfstand. Der Prüfstand besitzt eine in einem Rotornabenadapter gehaltene Rotornabe, an die über eine Drehverbindung ein Rotorblattelement montiert ist. An dem von dem Rotornabenadapter fortweisenden Ende des Rotorblattelements ist eine Hubeinrichtung vorgesehen, die an dem Rotorblatt angreift, um eine Querkraft in das Rotorblattelement einzuleiten. Die in das Rotorblattelement eingeleitete Querkraft bringt an der Drehverbindung für Prüfzwecke ein notwendiges Belastungs-/Biegemoment auf. Erfindungsgemäß ist eine Querkraftkompensations-Einrichtung (Qkk-Einrichtung) vorgesehen, die zwischen der Drehverbindung und der Hubeinrichtung über einen spannbaren Gurt das Rotorblattelement abstützt, um ein vorbestimmtes Verhältnis von Biegemoment und Querkraft an der Drehverbindung einzustellen. Über die Hubeinrichtung wird eine Querkraft bevorzugt am Rotorblattende eingeleitet, diese Querkraft wird mit der Querkraftkompensations-Einrichtung teilweise kompensiert und in ein Biegemoment umgesetzt, das an der Drehverbindung anliegt. Die Verwendung einer Querkraftkompensations-Einrichtung erlaubt es, mit einem Rotorblattelement zu arbeiten, das im Wesentlichen die mechanischen Eigenschaften des Rotorblattwurzelbereiches nachbildet, aber nicht die gesamte Länge des Rotorblatts aufweist. Durch die Verwendung eines Rotorblattelements wird die Möglichkeit geschaffen, die gewünschten Tests an der Drehverbindung mit deutlich geringerem Aufwand durchzuführen, wobei Rotorblattwurzelbereich und Rotorblattnabe verwendet werden, um eine Originalsteifigkeit abzubilden und das Rotorblattelement bevorzugt kürzer als ein Rotorblatt ist, wodurch ein kompakter Aufbau möglich ist.

In einer bevorzugten Weiterbildung bildet ausschließlich der Gurt der Querkraftkompensations-Einrichtung eine das Rotorblattelement abstützende Auflagefläche. Die Verwendung eines Gurtes zur Abstützung des Rotorblattelements bei eingeleiteten Querkräften stellt sicher, dass die von der Querkraftkompensations-Einrichtung aufzunehmende Kraft gleichmäßig über die Auflagefläche des Gurtes verteilt und so eine Beschädigung des Rotorblattelements vermieden wird.

In einer bevorzugten Ausgestaltung besitzt die Querkraftkompensations-Einrichtung ein ortsfestes Umlenkelement und eine Spannschwinge, deren Abstand über mindestens einen Spannzylinder eingestellt werden kann. Durch eine Veränderung des Abstandes zwischen dem Umlenkelement und der Spannschwinge ist es möglich, die Querkraftkompensations-Einrichtung auf die aufzunehmende Stützkraft einzustellen und entsprechend anzupassen. Bevorzugt sind dafür mindestens zwei Paar Rollen vorgesehen, die als Lager für den Gurt vorgesehen sind, wobei der Gurt als Endlosgurt über die mindestens vier Rollen umläuft. Durch ein Verspannen des Umlenkelementes gegen die Spannschwinge wird der Gurt gespannt und kann die Stützkraft auf den Rotorblattwurzelbereich besser aufbringen.

In einer bevorzugten Ausgestaltung besitzt das Umlenkelement eine L-Form, an dessen Fuß sich der mindestens eine Spannzylinder abstützt. Die Spannschwinge ist schwenkbar in der Querkraftkompensations-Einrichtung gelagert, wobei sie bei einem Ausfahren des Spannzylinders verschwenkt und damit den Gurt spannt.

In einer bevorzugten Ausgestaltung ist die Querkraftkompensations-Einrichtung entlang einer Längsrichtung des Rotorblattelements verfahrbar. Die verfahrbare Querkraftkompensations-Einrichtung stellt sicher, dass sie in die gewünschte Position zwischen Drehverbindung und Krafteinleitung durch die Hubeinrichtung gebracht werden kann, wodurch sich über die Länge der Hebelarme auch die gewünschten Biegemomente und Querkräfte einstellen lassen. Je nach Ausgestaltung kann die Querkraftkompensations-Einrichtung auch ein Fahrwerk besitzen, mit dem sie verfahrbar ist, insbesondere um als Hub- und Verfahreinrichtung für den Tausch der Pitchdrehverbindung verwendet zu werden.

In einer bevorzugten Ausgestaltung ist das Rotorblattelement als ein Rotorblattstumpf ausgebildet, dessen Länge einen Bruchteil der Länge eines vollständigen Rotorblatts aufweist. Die Verwendung der Querkraftkompensations-Einrichtung erlaubt es in besonderem Maße, einen Rotorblattstumpf an dem Prüfstand einzusetzen, wobei über die Querkraftkompensations-Einrichtung ein gewünschtes Verhältnis zwischen Biegemoment und Querkraft an der Drehverbindung eingestellt werden kann, so als würden Windlasten an einem Rotorblatt über dessen gesamte Länge angreifen.

Bevorzugt ist eine Lasteinleiteinrichtung für die Hubeinrichtung vorgesehen, mit der die Kraft in das Rotorblattelement eingeleitet wird. Die Lasteinleiteinrichtung ist in an den Querschnitt des Rotorblattelements angepasst und sorgt insbesondere dafür, dass es nicht zu Verfälschungen in der Kraftverteilung kommt, aufgrund des Umstandes, dass ein Rotorblattelement anstelle eines vollständigen Rotorblatts im Prüfstand verwendet wird. Bevorzugt bietet die Lasteinleiteinrichtung den Freiheitsgrad des Pitchens, was eine Blattverstellung während des Belastens zulässt.

In einer besonders bevorzugten Weiterbildung der Erfindung weist die Rotornabenhalterung mindestens einen Stabilisationszylinder auf, der der Hubeinrichtung entgegenwirkt, um den Prüfstand zu stabilisieren, wodurch es möglich ist, Belastungen an der Pitchdrehverbindung aufzubauen, die größer sein können, als sie von einem Rotornabenadapter allein aufgenommen werden können. Die Verwendung eines Stabilisationszylinders besitzt den besonderen Vorteil, dass die Rotornabenhalterung ausreichend stabilisiert ist. Bevorzugt weist die Rotornabenhalterung einen Rotornabenadapter zur Verbindung mit einem Wellenflansch der Rotornabe und zwei hebelartigen Abstützelemente zur Verbindung mit zwei Rotorblattflanschen an der Rotornabe auf. In dieser bevorzugten Ausgestaltung ist die Rotornabenhalterung dreiteilig ausgebildet, wobei die drei Teile jeweils mit einem Anschlussflansch an der Rotornabe verbunden sind. Der Rotornabenadapter stützt sich stehend auf einem Untergrund, beispielsweise in Form eines Fundaments ab. Die beiden zur Verbindung mit den zwei Rotorblattflanschen der Rotornabe vorgesehenen Abstützelemente besitzen einen Anschlussflansch zur Verbindung mit der Rotornabe. Jedes Abstützelement besitzt ferner einen Hebelarm, der bevorzugt über einen Stabilisationszylinder mit dem Untergrund verbunden ist, um eine stabilisierende Kraft in die Rotornabenhalterung einzuleiten. Die Krafteinleitung erfolgt somit auf beiden Seiten der Pitchdrehverbindung über die Hubeinrichtung in das Rotorblattelement und über die Hebelarme der Abstützelemente in die Rotornabe, hierdurch wird der Prüfstand insgesamt stabilisiert.

In einer bevorzugten Ausgestaltung sind an der Drehverbindung Messsensoren vorgesehen, die mit einer Prüfstandseinheit verbunden sind.

Kräfte und Belastungen werden aus den Zylinderkräften und den Positionen sowie Dimensionen der Pitchdrehverbindung berechnet. An der Pitchdrehverbindung werden Verformungen und Dehnungen direkt gemessen.

In einer bevorzugten Weiterbildung der Erfindung sind das Rotorblattelement und seine Drehverbindung mit einem Pitchantrieb ausgestattet, so dass auch Untersuchungen an dem Pitchantrieb durchgeführt werden können.

Ein bevorzugtes Ausführungsbeispiel der Erfindung wird anhand der nachfolgenden Figuren näher erläutert. Es zeigen:
- Fig. 1: eine perspektivische Ansicht eines Rotorblattprüfstandes mit einem Rotorblattelement und einer Querkraftkompensations-Einrichtung und

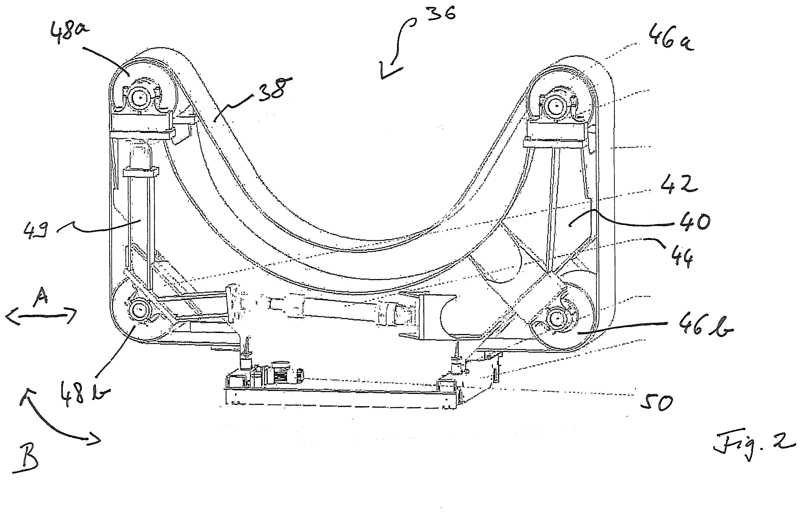

- Fig. 2: eine perspektivische Ansicht einer Querkraftkompensations-Einrichtung mit Gurt ohne Rotorblatt.

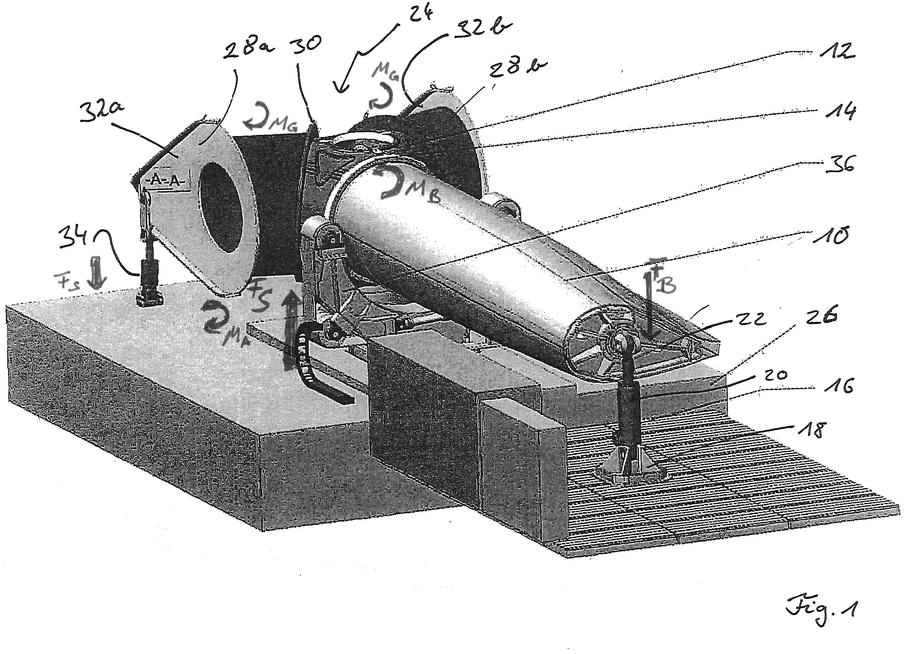

Fig. 1 zeigt eine Rotorblattelement 10, das an einer Rotornabe 12 unter Zwischenschaltung einer Drehverbindung 14 angeordnet ist. Die Drehverbindung 14 wird gelegentlich auch als Pitchdrehverbindung bezeichnet. Das Rotorblattelement 10 bildet eine Rotorblattwurzel, die beispielsweise ein Fünftel der Länge des gesamten Rotorblatts beträgt.

Einen Hubeinrichtung 16 besitzt einen Fuß 18, einen Hydraulikzylinder 20 und eine Krafteinleiteeinrichtung 22. Die Krafteinleiteeinrichtung 22 ist in ihrer Form an die Kontur des Rotorblattelements 10 angepasst und gelenkig mit dem Hydraulikzylinder 20 verbunden.

Die Rotornabe 12 ist über einen Rotornabenadapter 24 auf einem Fundament 26 abgestützt. In Fig. 1 sind von dem Rotornabenadapter 24 zwei Abstützelemente 28a, 28b zu erkennen. Jedes der Abstützelemente 28a, 28b besitzt einen Anschlussflansch 30, mit dem das Abstützelement mit der Rotornabe 12 verbunden ist. Ferner sind zwei Hebelarme 32a und 32b an jedem der Abstützelemente 28a, 28b vorgesehen. Die Hebelarme 32a, 32b liegen nicht auf dem Fundament 26 auf, sondern sind über hydraulische Stabilisierungszylinder 34 mit dem Ende der Hebelarme 32a, 32b verbunden.

Die Rotornabenhalterung 24 besitzt zusätzlich einen Fußadapter (nicht dargestellt), der mit einem Wellenflansch der Rotornabe verbunden ist und auf dem Fundament 26 aufsteht. Für den Prüfvorgang wird über den Hubzylinder 20 eine Kraft in das Rotorblattelement eingeleitet. Zur Einleitung der Kraft wird der Hubzylinder 20 verkürzt, ebenso wie der Hydraulikzylinder 34 an dem Abstützelement. Ein Biegemoment für die Drehverbindung 14 stammt von der (Qkk-Einrichtung) 36 und wird in Kauf genommen.

Die Querkraftkompensations-Einrichtung 36 besitzt einen umlaufenden Gurt 38 sowie ein Umlenkelement 40 und eine Spannschwinge 42. Zwischen den Elementen 40, 42 sind ein oder mehrere Spannzylinder 44 vorgesehen. Spannschwinge 42 und Umlenkelement 40 besitzen jeweils ein Rollenpaar 46a, 46b, 48a, 48b. Der Endlosgurt 38 ist über die Rollenpaare 46a, 46b, 48a, 48b geführt. Zwischen dem Umlenkelement und der Spannschwinge wirkt der Spannzylinder 44, der bei einer Verlängerung den Abstand zwischen den Rollen 46b und 48b in Richtung des Doppelpfeils A vergrößert. Die Vergrößerung wird durch eine Schwenkbewegung der Spannschwinge 42 in Richtung des Doppelpfeils B erzielt. Hierzu ist der Arm 49 der Spannschwinge 42 schwenkbar unterhalb der Rolle 48a angelenkt.

Zur besseren Einstellung der Querkraftkompensations-Einrichtung 36 besitzt diese einen Fahrantrieb 50, mit dem diese in Rotorblattlängsrichtung verfahren kann, was insbesondere für einen Tausch der Pitchdrehverbindung und/oder des Rotorblattelements von Vorteil ist. Das Verhältnis von Querkraft und Belastungsmoment an der Pitchdrehverbindung wird hauptsächlich über den Druck in dem oder den Spannzylindern und der Hubeinrichtung eingestellt, die Querkraftkompensation wird so nah wie möglich an der Pitchdrehverbindung betrieben, um gerade das der Hauptbelastung entgegenwirkende Moment der QKK-Einrichtung so gering wie möglich zu halten.

Das Rotorblattelement liegt dabei bevorzugt nahe der Drehverbindung auf dem Gurt auf, der durch die Querkraftkompensations-Einrichtung 36 gehalten und gespannt wird. Die Spannung erfolgt im Prüfbetrieb synchron zur Einleitung der Querkraft über die Hubeinrichtung 16.

Fig. 1 zeigt ebenfalls in einer schematischen Darstellung die wesentlichen an dem erfindungsgemäßen Prüfstand auftretenden Kräfte F und Momente M. Die Belastungskraft F_{B} wird über die Hubeinrichtung 16 eingeleitet. An der Querkraftkompensationseinrichtung 36 wird die Stützkraft F_{S} durch den gespannten Gurt aufgebracht. Es entsteht das Belastungsmoment M_{B}, das an der Pitchdrehverbindung angreift. Nabenseitig wird durch die Rotornabenhalterung das Adaptermoment M_{A}, insbesondere durch den sich auf dem Fundamentkörper abstützenden Rotornabenadapter aufgebracht. Die Gegenmomente M_{G} an den Abstützelementen werden über die Stabilisationszylinder 34 mit der Stabilisationskraft F_{S} aufgebracht.

### Bezugszeichenliste

- 10: Rotorblattelement
- 12: Rotornabe
- 14: Drehverbindung
- 16: Hubeinrichtung
- 18: Fuß
- 20: Hydraulikzylinder
- 22: Lasteinleiteeinrichtung
- 24: Rotornabenhalterung
- 26: Fundament
- 28a: Abstützelement
- 28b: Abstützelement
- 30: Anschlussflansch
- 32a: Hebelarm
- 32b: Hebelarm
- 34: Stabilisierungszylinder
- 36: Querkraftkompensations-Einrichtung
- 38: Gurt
- 40: Umlenkelement
- 42: Spannschwinge
- 44: Spannzylinder
- 46a,b: Rollenpaar
- 48a,b: Rollenpaar
- 50: Fahrantrieb

## Patentansprüche

1. Prüfstand für eine Pitchdrehverbindung, der eine in einem Rotornabenadapter (24) gehaltene Rotornabe (12) aufweist, an die über eine Drehverbindung (14) ein Rotorblattelement (10) montiert ist, an dessen von dem Rotornabenadapter (24) fortweisendem Ende eine Hubeinrichtung (16) angreift, die eine Querkraft in das Ende des Rotorblattelements (10) einleiten kann, **dadurch gekennzeichnet, dass** eine Querkraftkompensationseinrichtung (QKK-Einrichtung) (36) zwischen der Drehverbindung (14) und der Hubeinrichtung (16) über einen spannbaren Gurt (38) das Rotorblattelement (10) abstützt, um ein vorbestimmtes Verhältnis von Biegemoment und Querkraft an der Drehverbindung (14) ein zu stellen.

2. Prüfstand nach Anspruch 1, **dadurch gekennzeichnet, dass** ausschließlich der Gurt (38) der QKK-Einrichtung (36) eine das Rotorblattelement (10) abstützende Auflagefläche bildet.

3. Prüfstand nach Anspruch 1 oder 2, **dadurch gekennzeichnet, dass** die QKK-Einrichtung (36) ein feststehendes Umlenkelement (40) und eine Spannschwinge (42) aufweist, deren Abstand über mindestens einen Spannzylinder (44) eingestellt werden kann.

4. Prüfstand nach Anspruch 3, **dadurch gekennzeichnet, dass** das Umlenkelement (40) und die Spannungsschwinge (42) mindestens zwei Paar Rollen (46, 48) tragen, die als Lager für den Gurt (38) vorgesehen sind, wobei der Gurt (38) als Endlosgurt um die mindestens vier Rollen (46, 48) umläuft.

5. Prüfstand nach Anspruch 3 oder 4, **dadurch gekennzeichnet, dass** die festende Schwinge (40) eine L-Form besitzt an deren Fuß sich der mindestens eine Spannzylinder (44) abstützt und die Spannschwinge (42) schwenkbar derart gelagert ist, dass bei einem Ausfahren des Spannzylinders (44) der Gurt (38) gespannt wird.

6. Prüfstand nach einem der Ansprüche 1 bis 5, **dadurch gekennzeichnet, dass** die QKK-Einrichtung (36) entlang einer Längsrichtung des Rotorblattelements (10) verfahrbar ist.

7. Prüfstand nach einem der Ansprüche 1 bis 6, **dadurch gekennzeichnet, dass** das Rotorblattelement (10) ein Blattstumpf ist, der einen Bruchteil der Länge eines vollständigen Rotorblattes aufweist.

8. Prüfstand nach einem der Ansprüche 1 bis 7, **dadurch gekennzeichnet, dass** die Hubeinrichtung (16) mindestens einen Hydraulikzylinder (20) aufweist, der zur Aufbringung einer Kraft das Rotorblattelement (10) gegen den gespannten Gurt (38) der QKK-Einrichtung (36) drückt.

9. Prüfstand nach Anspruch 8, **dadurch gekennzeichnet, dass** die Hubeinrichtung (16) über eine an dem Querschnitt des Rotorblattelements (10) angepasste Lasteinleiteinrichtung seine Kraft einleitet, wobei die Lasteinleiteinrichtung eine Blattverstellung zulässt.

10. Prüfstand nach einem der Ansprüche 1 bis 9, **dadurch gekennzeichnet, dass** der Rotornabenadapter (24) mindestens einen Stabilisationszylinder (34) aufweist, der der Hubeinrichtung (16) entgegen wirkt.

11. Prüfstand nach einem der Ansprüche 1 bis 10, **dadurch gekennzeichnet, dass** die Rotornabenhalterung (24) einen Rotornabenadapter zur Verbindung mit einem Wellenflansch der Rotornabe und zwei Abstützelemente (28a, 28b) zur Verbindung mit zwei Rotorblattflanschen der Rotornabe (12) aufweist.

12. Prüfstand nach Anspruch 11, **dadurch gekennzeichnet, dass** der Rotornabenadapter sich stehend auf einem Untergrund (26) abstützt.

13. Prüfstand nach Anspruch 11 oder 12, **dadurch gekennzeichnet, dass** jedes der Abstützelemente (28a, 28b) einen Anschlussflansch (30) zur direkten Verbindung mit dem Rotorblattflansch und einen Hebelarm (32a, 32b) aufweist, der mit dem Untergrund (26) verbunden ist, um eine die Rotornabe (12) stabilisierende Kraft einzuleiten.

14. Prüfstand nach einem der Ansprüche 1 bis 13, **dadurch gekennzeichnet, dass** an der Drehverbindung (14) des Rotorblattelements (10) Messsensoren vorgesehen sind, die mit einer Prüfstandeinheit verbunden ist, um erfasste Dehnungen und Verformungen aufzuzeichnen und auszuwerten.

15. Prüfstand nach einem der Ansprüche 1 bis 14, **dadurch gekennzeichnet, dass** das Rotorblattelement (10) mit einem Pitchantrieb ausgestattet ist.

## Claims

1. Test bench for a pitch-pivot connection, comprising a rotor hub (12) held in a rotor hub adapter (24), to which a rotor blade element (10) is mounted via a rotary connection (14), on the end of which rotor blade element (10) facing away from the rotor hub adapter (24) a lifting device (16) engages, which can introduce a transverse force onto the end of the rotor blade element (10), **characterized in that** a transverse force compensation device (TFC device) (36) between the rotary connection (14) and the lifting device (16) supports the rotor blade element (10) via a tensionable belt (38) in order to set a predetermined ratio of bending moment and transverse force at the rotary connection (14).

2. Test bench according to claim 1, **characterized in that** only the belt (38) of the TFC device (36) forms a bearing surface supporting the rotor blade element (10).

3. Test bench according to claim 1 or 2, **characterized in that** the TFC device (36) has a fixed deflection element (40) and a tensioning rocker (42), the distance between which can be adjusted via at least one tensioning cylinder (44).

4. Test bench according to claim 3, **characterized in that** the deflection element (40) and the tensioning rocker (42) carry at least two pairs of rollers (46, 48) which are provided as bearings for the belt (38), wherein the belt (38) circulates as an endless belt around the at least four rollers (46, 48).

5. Test bench according to claim 3 or 4, **characterized in that** the solid end rocker (40) has an L-shape, at the foot of which the at least one tensioning cylinder (44) is supported and the tensioning rocker (42) is pivotally mounted in such a way that the belt (38) is tensioned when the tensioning cylinder (44) is extended.

6. Test bench according to one of claims 1 to 5, **characterized in that** the TFC device (36) is movable along a longitudinal direction of the rotor blade element (10).

7. Test bench according to one of claims 1 to 6, **characterized in that** the rotor blade element (10) is a blade stub having a fraction of the length of a complete rotor blade.

8. Test bench according to one of claims 1 to 7, **characterized in that** the lifting device (16) has at least one hydraulic cylinder (20) which presses the rotor blade element (10) against the tensioned belt (38) of the TFC device (36) in order to apply a force.

9. Test bench according to claim 8, **characterized in that** the lifting device (16) introduces its force via a load introduction device adapted to the cross-section of the rotor blade element (10), the load introduction device allowing blade adjustment.

10. Test bench according to one of claims 1 to 9, **characterized in that** the rotor hub adapter (24) has at least one stabilizing cylinder (34) which counteracts the lifting device (16).

11. Test bench according to one of claims 1 to 10, **characterized in that** the rotor hub support (24) comprises a rotor hub adapter for connection to a shaft flange of the rotor hub and two support elements (28a, 28b) for connection to two rotor blade flanges of the rotor hub (12).

12. Test bench according to claim 11, **characterized in that** the rotor hub adapter is supported upright on a base (26).

13. Test bench according to claim 11 or 12, **characterized in that** each of the support elements (28a, 28b) has a connecting flange (30) for direct connection to the rotor blade flange and a lever arm (32a, 32b) connected to the base (26) for introducing a force stabilizing the rotor hub (12).

14. Test bench according to one of claims 1 to 13, **characterized in that** measuring sensors are provided on the rotary connection (14) of the rotor blade element (10), which is connected to a test bench unit in order to record and evaluate detected strains and deformations.

15. Test bench according to one of claims 1 to 14, **characterized in that** the rotor blade element (10) is equipped with a pitch drive.

## Revendications

1. Banc d'essai pour un raccord rotatif de tangage présentant un moyeu de rotor (12) maintenu dans un adaptateur de moyeu de rotor (24), sur lequel est monté un élément de pale de rotor (10) par le biais d'un raccord rotatif (14), à l'extrémité opposée à l'adaptateur de moyeu de rotor (24) duquel s'applique un dispositif de levage (16) capable d'introduire une force transversale dans l'extrémité de l'élément de pale de rotor (10), **caractérisé en ce qu'**un dispositif de compensation de force transversale (dispositif CFT) (36) entre le raccord rotatif (14) et le dispositif de levage (16) supporte l'élément de pale de rotor (10) par le biais d'une courroie susceptible d'être tendue (38), afin de régler un rapport prédéfini de moment de flexion et de force transversalement au niveau du raccord rotatif (14).

2. Banc d'essai selon la revendication 1, **caractérisé en ce que** seule la courroie (38) du dispositif CFT (36) forme une surface d'appui supportant l'élément de pale de rotor (10).

3. Banc d'essai selon la revendication 1 ou 2, **caractérisé en ce que** le dispositif CFT (36) présente un élément de déviation fixe (40) et une biellette de tension (42), dont l'espacement peut être réglé par au moins un vérin de tension (44).

4. Banc d'essai selon la revendication 3, **caractérisé en ce que** l'élément de déviation (40) et la biellette de tension (42) portent au moins deux paires de rouleaux (46, 48), lesquels sont prévus comme paliers pour la courroie (38), la courroie (38) tournant comme courroie sans fin autour des au moins quatre rouleaux (46, 48).

5. Banc d'essai selon la revendication 3 ou 4, **caractérisé en ce que** la biellette fixe (40) présente une forme en L, sur la base de laquelle s'appuie l'au moins un vérin de tension (44), et la biellette de tension (42) est montée de façon pivotante, de manière à tendre la courroie (38) lors d'un déploiement du vérin de tension (44).

6. Banc d'essai selon l'une des revendications 1 à 5, **caractérisé en ce que** le dispositif CFT (36) est déplaçable le long d'une direction longitudinale de l'élément de pale de rotor (10).

7. Banc d'essai selon l'une des revendications 1 à 6, **caractérisé en ce que** l'élément de pale de rotor (10) est un tronc de pale présentant une fraction de la longueur d'une pale de rotor complète.

8. Banc d'essai selon l'une des revendications 1 à 7, **caractérisé en ce que** le dispositif de levage (16) présente au moins un vérin hydraulique (20) pressant l'élément de pale de rotor (10) contre la courroie (38) tendue du dispositif CFT (36) pour l'application d'une force.

9. Banc d'essai selon la revendication 8, **caractérisé en ce que** le dispositif de levage (16) introduit sa force par le biais d'un dispositif d'introduction de force adapté à la section transversale de l'élément de pale de rotor (10), le dispositif d'introduction de force permettant un ajustement de pale.

10. Banc d'essai selon l'une des revendications 1 à 9, **caractérisé en ce que** l'adaptateur de moyeu de rotor (24) présente au moins un vérin de stabilisation (34) agissant contre le dispositif de levage (16).

11. Banc d'essai selon l'une des revendications 1 à 10, **caractérisé en ce que** la monture de moyeu de rotor (24) présente un adaptateur de moyeu de rotor pour le raccordement avec une bride d'arbre du moyeu de rotor et deux éléments d'appui (28a, 28b) pour le raccordement avec deux brides de pale de rotor du moyeu de rotor (12).

12. Banc d'essai selon la revendication 11, **caractérisé en ce que** l'adaptateur de moyeu de rotor s'appuie debout sur une base (26).

13. Banc d'essai selon la revendication 11 ou 12, **caractérisé en ce que** chacun des éléments d'appui (28a, 28b) présente une bride de raccordement (30) pour le raccordement direct avec la bride de pale de rotor ainsi qu'un bras de levier (32a, 32b), lequel est relié à la base (26) pour introduire une force stabilisant le moyeu de rotor (12).

14. Banc d'essai selon l'une des revendications 1 à 13, **caractérisé en ce que** des capteurs de mesure sont prévus au niveau du raccord rotatif (14) de l'élément de pale de rotor (10), lesquels sont reliés à une unité de banc d'essai pour enregistrer et évaluer des allongements et des déformations détectés.

15. Banc d'essai selon l'une de revendications 1 à 14, **caractérisé en ce que** l'élément de pale de rotor (10) est doté d'un entraînement de pas.
